# DEMANDE DE BREVET EUROPEEN

(11) **EP 1 041 256 A1**
(43) Date de publication de la demande: **04.10.2000**
(21) Numéro de dépôt: 00400838.9
(22) Date de dépôt: 27.03.2000
(51) Int. Cl.: F01P 7/16, G05D 23/13

(54) **Dispositif thermostatique à deux régimes de régulation, à deux éléments thermostatiques**

(30) Priorité: 30.03.1999 FR 9903973
(71) Demandeur: VERNET S.A., 91290 Arpajon Cédex (FR)
(72) Inventeur: Chamot, Jean, 91291 Arpajon (FR); Mabboux, Lionel Jean, 91700 Sainte Genevieve des Bois (FR)
(74) Mandataire: Farges, Roger

(57) **Abrégé**

Le dispositif comporte une chambre (3) présentant au moins trois accès (4, 5, 6) dont deux sont obturables par des clapets (9, 10) portés par un élément thermostatique principal (7) logé partiellement dans la chambre, un clapet s'éloignant de son siège quand l'autre se rapproche du sien.

Une conduite (1) débouchant dans la chambre (3) par l'un des deux sièges, contient un élément thermostatique (17) de réglage de seuil portant un palonnier mobile (21) muni d'une butée mobile (16) pour l'élément thermostatique principal (7); l'élément thermostatique de réglage (17) comporte des moyens de chauffage électrique connectables à une source d'alimentation électrique activable et désactivable sélectivement pour, lors de la désactivation, diminuer la distance entre la butée (16) et le siège (14) de la conduite et ainsi la température pour laquelle ce siège est dégagé.

Le dispositif est utilisable dans les circuits de refroidissement des moteurs thermiques.

## Description

L'invention concerne un dispositif thermostatique présentant deux seuils de fonctionnement afin d'assurer deux plages de régulation, activables sélectivement.

De tels dispositifs sont utiles notamment dans le domaine des véhicules automobiles, en vue d'optimiser le refroidissement du moteur du véhicule en fonction de la charge de celui-ci.

En effet, de manière conventionnelle, le circuit de refroidissement par liquide des moteurs à combustion interne comporte un système de canalisations reliant le moteur à un radiateur de refroidissement, dans lequel est inséré un dispositif thermostatique modifiant, dans le liquide à destination du moteur, la proportion entre le liquide dit « froid» provenant du radiateur et celui dit « chaud » qui n'a pas transité par celui-ci, afin de fournir au bloc moteur, du liquide de refroidissement à une même température en principe optimale, quelles que soient les circonstances.

Il s'est cependant révélé qu'à très forte charge, le moteur « chauffe » d'une manière telle que le respect de la température normalement optimale à l'entrée du moteur entraîne une température interne de celui-ci susceptible d'entraîner sa détérioration.

De manière connue, pour éviter cet inconvénient, on choisit comme température d'introduction du liquide, une température plus basse que la température normalement optimale, mais ainsi, à faible charge, ce qui correspond au cas d'utilisation le plus fréquent d'un véhicule, on fonctionne notablement au-dessous de la valeur optimale, et la consommation en carburant et la pollution sont augmentées.

En vue de remédier à ce nouvel inconvénient, l'objet du document FR 93 11 919 concerne un dispositif thermostatique comportant un unique élément thermostatique, qui régule la température au moyen d'un clapet et décale seulement en cas de fonctionnement du moteur à pleine charge, la plage de régulation, pour réguler alors à une température plus basse que la température optimale dans les conditions normales, généralement approximativement à demi-charge ; à cette fin, l'élément thermostatique comporte un organe de chauffage électrique lui apportant un chauffage complémentaire lorsqu'une sonde disposée de manière appropriée détecte que le moteur fonctionne au voisinage de sa pleine charge. Cependant, en cas de défaillance du système de chauffage électrique de l'élément, on se retrouve en permanence en régulation à haute température correspondant à la demi-charge, ce qui entraîne des risques d'endommagement du moteur lorsque celui-ci fonctionne à pleine charge ; en outre, en cas de défaillance de l'élément thermostatique lui-même, celui n'assure plus sa fonction de régulation, et le clapet de régulation reste fermé, ce qui mène très rapidement à l'endommagement du moteur.

Egalement en vue de remédier à cet inconvénient, les objets des documents FR 85 15 967 et US 4 875 437 concernent un dispositif thermostatique comprenant un élément de régulation disposé dans le circuit de refroidissement, et un élément de décalage chauffé qui est disposé à l'extérieur du circuit de refroidissement. Grâce à cette conception, même en cas de défaillance de l'élément de décalage chauffé lui-même, il subsiste une régulation, mais cette régulation est à haute température, ce qui laisse subsister des risques d'endommagement du moteur lorsque celui-ci fonctionne à pleine charge.

L'invention a pour but de remédier à ces inconvénients et concerne à cette fin un dispositif thermostatique à deux régimes de régulation, comportant un équipage mobile de dosage de fluide comprenant deux clapets et adapté pour se mouvoir dans une chambre présentant un premier accès, d'entrée de fluide, un deuxième accès, de sortie de fluide, et au moins un troisième accès, au moins deux de ces trois accès étant entourés de sièges respectifs pour les deux clapets de sorte que lorsque l'un quelconque des clapets quitte son siège et s'en éloigne, l'autre se rapproche du sien éventuellement jusqu'à obturation, l'équipage mobile de dosage étant porté par une partie d'un élément thermostatique de dosage de fluide qui est mobile par rapport à une autre partie de l'élément thermostatique disposée au moins partiellement hors de la chambre, dispositif caractérisé en ce qu'il comporte une partie de boîtier sous la forme d'une conduite dont une extrémité débouche dans la chambre par un siège de clapet entourant l'un des accès de la chambre, cette conduite contient un élément thermostatique de réglage de seuil comportant une partie mobile portant un équipage mobile de réglage de seuil muni d'une butée mobile pour la partie de l'élément thermostatique de dosage qui est hors de la chambre, et l'élément thermostatique de réglage de seuil comporte des moyens de chauffage électrique adaptés pour être reliés électriquement à une source d'alimentation électrique activable et désactivable sélectivement pour que, quand l'élément de réglage n'est pas chauffé, la distance entre la butée mobile et le siège d'accès côté conduite, et ainsi la température pour laquelle ce siège est libéré par son clapet, soient plus faibles que quand il est chauffé.

Ainsi, en cas de défaillance mécanique ou électrique (y compris de l'électronique de contrôle) autre que la destruction complète du dispositif, en l'absence de dilatation supplémentaire de l'élément de réglage de seuil, on régule toujours non pas à haute mais à basse température.

Le dispositif peut de plus présenter une ou plusieurs des caractéristiques suivantes :
- la conduite est centrée sur un axe longitudinal sur lequel sont également centrés les deux sièges de clapets, et la partie mobile de l'élément thermostatique qui porte l'équipage mobile comprenant les deux clapets est mobile en translation longitudinale le long de cet axe ;
- l'équipage mobile de l'élément thermostatique de réglage de seuil comporte une partie fixe logée dans une cuvette intérieure à la conduite et reliée à la paroi de celle-ci, et une partie mobile comportant une extrémité libre tournée vers une extrémité de la conduite qui est à l'opposé du siège de celle-ci ;
- l'équipage mobile de l'élément thermostatique de réglage de seuil comporte un palonnier en forme d'étrier s'étendant en direction du siège de la conduite, et la butée mobile est portée par cet équipage mobile au niveau des extrémités de branches de l'étrier situées du côté du siège tronconique ;
- les moyens de chauffage électrique comprennent une résistance électrique logée dans une partie fixe de l'élément thermostatique de réglage de seuil portée par une cuvette intérieure de la conduite ;
- les moyens de chauffage électrique sont reliés par des conducteurs électriques à une source d'alimentation électrique reliée par ailleurs à une sonde de détection de température adaptée pour détecter la température d'un liquide ;
- les moyens de chauffage électrique sont reliés par des conducteurs électriques à une source d'alimentation électrique reliée par ailleurs à une sonde de détection de température adaptée pour détecter la température d'un liquide et à une alarme, pour que, lorsque la sonde détecte une température au moins égale à une température de sécurité prédéterminée, la source d'alimentation électrique soit désactivée et ainsi d'une part l'élément de réglage ne soit pas chauffé électriquement et le dispositif régule dans une gamme basse de températures, et d'autre part l'alarme soit activée ;
- la chambre comporte un accès de sortie entouré d'un siège réalisé dans la conduite pour un clapet, un accès de sortie entouré d'un siège pour un clapet, et un accès d'entrée ;
- l'accès d'entrée est un accès d'entrée de liquide chaud provenant d'un moteur par exemple de véhicule, et les accès de sortie sont des accès de sortie de liquide chaud adaptés pour être reliés respectivement à une entrée d'un radiateur de refroidissement et à une entrée du moteur éventuellement par l'intermédiaire d'une pompe de circulation ;
- la chambre comporte un accès d'entrée entouré d'un siège réalisé dans la conduite pour un clapet, un accès d'entrée entouré d'un siège pour un clapet, et un accès de sortie ;
- l'accès d'entrée entouré d'un siège réalisé dans la conduite est un accès d'entrée de liquide froid adapté pour être relié à un radiateur de refroidissement par exemple de véhicule, l'autre accès d'entrée est un accès d'entrée de liquide chaud provenant d'un moteur du véhicule, et l'accès de sortie est un accès de sortie de liquide chaud ou de liquide froid ou d'un mélange de liquide chaud et de liquide froid en fonction de la position de l'élément thermostatique de dosage.

D'autres caractéristiques et avantages de l'invention ressortiront de la description qui va suivre d'une forme de réalisation de l'invention donnée à titre d'exemple non limitatif et représentée sur les dessins joints dans lesquels :

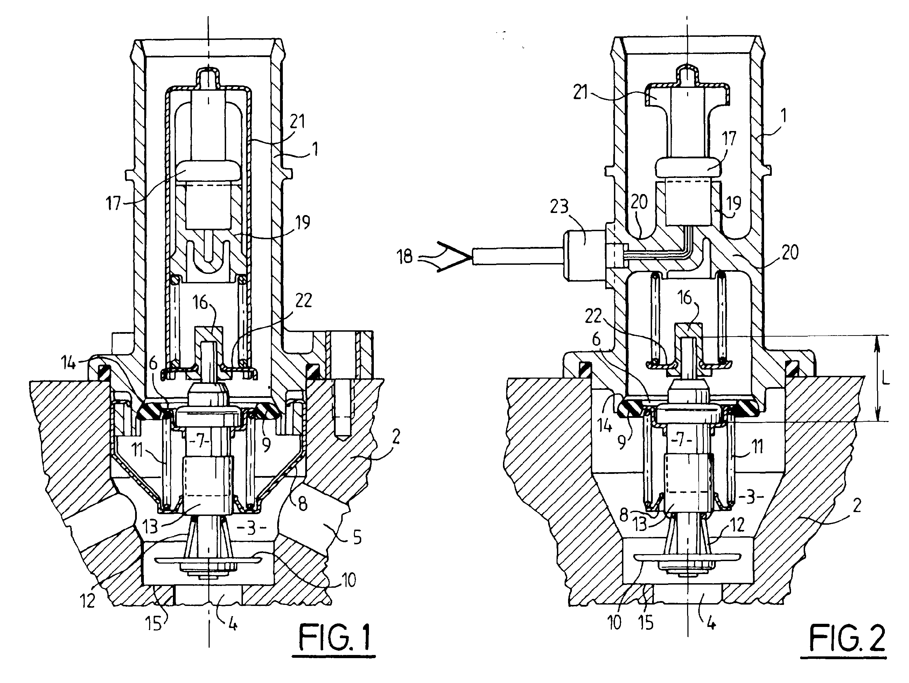

- la figure 1 est une vue en coupe longitudinale d'un dispositif selon l'invention,
- la figure 2 est une autre vue en coupe longitudinale du dispositif selon l'invention, selon un plan perpendiculaire au plan de coupe de la figure 1,
- la figure 3 montre schématiquement le montage du dispositif des figures 1 et 2 dans un circuit de refroidissement de véhicule à moteur thermique,
- la figure 4 montre schématiquement une variante du montage de la figure 3, et
- les figures 5 et 6 sont des diagrammes illustrant le fonctionnement du dispositif selon l'invention dans les circuits de refroidissement représentés schématiquemènt sur les figures 3 et 4.

Sur les figures, afin de ne pas surcharger le dessin, un grand nombre de composants et de traits relatifs à des composants qui sont en arrière des plans de coupe n'ont pas été représentés, mais la compréhension de l'agencement du dispositif selon l'invention sera facilitée par la description qui va suivre.

Le dispositif thermostatique représenté comporte de manière connue divers organes logés dans un boîtier formé par une conduite ou pipe 1 et par un corps 2 pouvant être constitué par une région d'un moteur de véhicule entourant une chambre 3 de transit pour le liquide de refroidissement creusée dans cette région et dans laquelle aboutissent comme on le verra divers canaux de circulation de fluide. La conduite 1 est fixée au corps 2 ici par vis.

La conduite 1 et la chambre 3 présentent une forme générale de révolution à section droite approximativement circulaire et s'étendent en alignement le long d'un même axe longitudinal central.

Selon l'invention, la chambre 3 comporte au moins trois accès 4, 5, 6 dont la fonction dépend du mode d'utilisation du dispositif, et notamment de l'implantation de celui-ci dans le circuit de refroidissement du moteur; un premier accès est un accès d'entrée de fluide dit « chaud » provenant du moteur, un deuxième accès est un accès de sortie de fluide pour évacuer de la chambre la partie du fluide destinée à être envoyée au moteur, généralement par l'intermédiaire d'une pompe de circulation, et un troisième accès, relié à un radiateur de refroidissement, peut être en fonction de l'implantation du dispositif dans le circuit de refroidissement, un accès de sortie de fluide « chaud » relié à l'entrée du radiateur ou un accès d'entrée de fluide « refroidi » ou « froid » relié à la sortie du radiateur ; un éventuel quatrième accès peut être un accès d'entrée de fluide chaud provenant de divers appareils à refroidir tels qu'un aérotherme ou des échangeurs. L'une des régions d'extrémités de la conduite 1 débouche dans la chambre 3, en pénétrant dans celle-ci, et c'est l'orifice correspondant qui constitue le troisième accès de fluide. Le premier et le deuxième accès 4, 5 sont les embouchures de deux canaux aboutissant dans la chambre, l'un à l'opposé du troisième accès 6 et centré sur l'axe central du dispositif, et l'autre latéralement.

A l'intérieur de la chambre, est logée au moins partiellement une partie mobile en translation d'un élément thermostatique 7 ici à cire, portée et guidée dans un étrier 8 s'étendant dans la chambre 3, cet étrier étant accroché à la région d'extrémité de la conduite 1. Cette partie mobile de l'élément thermostatique 7 porte un équipage mobile comprenant deux clapets 9, 10 disposés respectivement en appui contre des collerettes des régions d'extrémités opposées de cette partie mobile de l'élément thermostatique ; ces deux clapets 9, 10 sont enfilés autour de la partie mobile de l'élément thermostatique et sollicités en direction de leurs collerettes respectives par une extrémité d'un organe élastique tel qu'un ressort 11, 12 dont l'extrémité opposée est en appui contre l'étrier 8 pour le ressort de l'un des clapets et contre une cuvette 13 entourant partiellement le corps de l'élément thermostatique pour celui de l'autre clapet.

Au moins deux des trois premiers accès 4, 5, 6 de la chambre sont entourés de sièges respectifs 15, 14 pour les deux clapets 10, 9, centrés sur l'axe longitudinal de la conduite 1. Ce sont d'une part l'accès 4 constitué par l'embouchure de canal centrée sur l'axe du dispositif, dont le siège 15, usiné dans le corps 2, est plan et s'étend perpendiculairement à l'axe central du dispositif pour recevoir un clapet plan proche de l'extrémité libre de la partie mobile de l'élément thermostatique 7, et d'autre part le troisième accès 6, dont le siège 14, usiné dans la région d'extrémité de la conduite 1, est tronconique et évasé en direction de l'intérieur de la chambre 3 pour recevoir un clapet 9 de forme correspondante proche d'une partie de l'élément thermostatique qui est disposée au moins partiellement (ici, totalement) hors de la chambre, plus précisément dans la conduite 1, dite habituellement « partie fixe », mais qui est ici également mobile comme on le verra dans la suite ; on peut noter que cette partie habituellement fixe est ici constituée par un piston, monté coulissant dans une coupelle contenant une cire très dilatable à la chaleur.

Comme les deux clapets 9, 10 sont montés à proximité des deux extrémités opposées de la partie de l'élément thermostatique 7 qui est mobile en translation le long de l'axe longitudinal dans la chambre 3, entre leurs deux sièges respectifs 14, 15, lorsque l'un quelconque des deux clapets quitte son siège et s'en éloigne, l'autre se rapproche du sien, avec une possibilité de prendre appui sur lui si l'amplitude du mouvement est suffisante. Le ressort cylindrique 11 du clapet tronconique 9 étant en appui contre l'étrier fixe 8, est comprimé lorsque ce clapet s'éloigne de son siège, tandis que le ressort tronconique 12 du clapet plan 10 en appui contre la cuvette mobile 13, est comprimé lorsque ce clapet étant en butée, le mouvement de translation se poursuit, et joue le rôle de ressort de surcourse.

Ainsi, dans l'hypothèse où la partie de l'élément thermostatique 7 qui se trouve dans la conduite 1 est maintenue fixe au moyen d'une butée 16, cet agencement permet, si les deux accès 4, 6 à clapet sont des sorties et au moins un autre accès 5 est une entrée, un dosage relatif des écoulements de sortie, et si les deux accès 4, 6 à clapet sont des entrées et au moins un autre accès 5 est une sortie, un dosage des proportions des écoulements d'entrée dans l'écoulement de sortie. Dans chacun des deux cas, on obtient donc un régime de fonctionnement déterminé par l'emplacement de la butée 16, caractérisé par la distance L qui sépare la surface de butée pour la partie dite fixe de l'élément thermostatique 7 de dosage, de la région d'appui du siège 14 pour le clapet 9 tronconique, appelée « boîte » du dispositif thermostatique ; de la valeur de la boîte, dépend le seuil de déclenchement du dispositif thermostatique, c'est-à-dire la température pour laquelle le clapet tronconique quitte son siège.

Selon l'invention, pour obtenir deux régimes de fonctionnement (ou plus) du dispositif thermostatique et plus particulièrement de l'élément thermostatique 7 de dosage de fluide et de l'équipage mobile de dosage de fluide qu'il porte, on modifie sélectivement la boîte du dispositif, et pour cela l'emplacement de la butée 16 dans la conduite 1, et ainsi la partie dite fixe de l'élément thermostatique 7 peut se déplacer en fonction de l'emplacement de la butée 16. Ainsi, pour obtenir deux régimes de fonctionnement correspondant à deux seuils de déclenchement différents, il suffit de prévoir deux emplacements possibles pour la butée 16.

A cette fin, dans la conduite 1, est disposé un autre élément thermostatique 17 comportant une partie (réellement) fixe et une partie mobile portant un équipage mobile muni d'une butée mobile 16 pour la partie dite fixe de l'élément thermostatique 7 de dosage de fluide. Cet autre élément thermostatique 17, de réglage de seuil, comporte des moyens de chauffage électrique constitués de préférence par une résistance électrique ou une thermistance connue dans la technique sous le nom de C.T.P., adaptée pour être reliée par des conducteurs électriques 18 à une source d'alimentation activable et désactivable sélectivement, pour que l'élément thermostatique 17 puisse être chauffé ou non sélectivement.

En vue de positionner l'élément thermostatique 17 de réglage de seuil dans la conduite 1, celle-ci comporte intérieurement et approximativement centralement si l'on se réfère à sa longueur aussi bien qu'à sa section transversale, une cuvette 19 reliée à la paroi de la conduite par deux ponts 20 de matière s'étendant radialement dans le prolongement l'un de l'autre.

La cuvette 19 s'ouvre en direction de l'extrémité de la conduite 1 qui est à l'opposé du siège tronconique 14, pour recevoir la partie fixe de l'élément thermostatique 17 ici à cire constitué par la coupelle de celui-ci de telle sorte que l'extrémité libre de la partie mobile de cet élément constituée par un piston soit tournée vers cette extrémité de la conduite, et qu'ainsi l'élongation de l'élément 17 due à la dilatation de la cire se produise en direction de l'extrémité en question de la conduite 1, et non en direction du siège.

Le piston de l'élément thermostatique 17 de réglage de seuil porte un palonnier 21 en forme d'étrier s'étendant en direction du siège tronconique 14 de la conduite pour le clapet tronconique de l'élément thermostatique 7 de dosage, dont les branches sont guidées par la surface extérieure de la cuvette 19 ; les extrémités des branches du palonnier 21 du côté du siège tronconique portent une rondelle 22 présentant un trou central à l'intérieur duquel est clipsée la butée mobile 16 pour la partie dite fixe de l'élément thermostatique 7 de dosage de fluide ; cette butée mobile 16 est réalisée sous la forme d'une crapaudine dans laquelle vient se loger le piston de l'élément thermostatique 7.

La résistance de chauffage électrique de l'élément thermostatique 17 de réglage de seuil est logée dans la coupelle fixe de celui-ci ; ce peut être par exemple une résistance sérigraphiée sur une plaquette isolante ou encore un composant enroulé en hélice connu commercialement sous le nom de Thermocoax. Les conducteurs électriques 18 de liaison de la résistance à la source d'alimentation sont logés dans un canal prévu dans la cuvette support 19 de l'élément thermostatique 17 et l'un des ponts 20 de matière reliant la cuvette 19 à la paroi de la conduite, et ils traversent un presse-étoupe 23 ancré dans cette paroi, dans le prolongement de ce pont de matière.

Il résulte de cet agencement que lorsque l'élément thermostatique 17 de réglage de seuil est chauffé, il s'allonge de telle sorte que le palonnier 21 s'éloigne du siège tronconique 14 de la conduite 1 et se rapproche de l'extrémité opposée de la conduite en entraînant la butée mobile 16 pour l'élément thermostatique 7 de dosage de fluide ; il en résulte un allongement de la boîte L de cet élément thermostatique 7, et ainsi une relativement grande dilatation de celui-ci est nécessaire pour que le clapet tronconique 9 quitte son siège 14 et que le clapet plan 10 se rapproche du sien, puisqu'au début de son élongation, la partie dite fixe de l'élément thermostatique 7 de dosage n'est pas bloquée et se déplace donc en direction du fond de la butée 16. Lorsque l'élément thermostatique 17 de réglage du seuil est désactivé, il se rétracte, le palonnier 21 se rapproche du siège tronconique 14, la boîte de l'élément thermostatique 7 de dosage est raccourcie grâce au refroidissement de l'élément thermostatique par le liquide de refroidissement qui l'entoure, qui est à une température plus basse, et une faible dilatation de l'élément thermostatique de dosage suffit pour faire décoller le clapet tronconique 9 de son siège 14. Il est ici souhaitable que la dilatation de l'élément thermostatique 17 de réglage de seuil soit provoquée essentiellement par son chauffage par l'alimentation électrique et non par une augmentation de température du fluide qui l'entoure afin que ses dilatations et rétractions puissent être provoquées sélectivement par un signal électrique.

On peut noter qu'une panne électrique et la plupart des pannes mécaniques se traduisent par une impossibilité de dilatation de l'élément thermostatique 17 de réglage de seuil, et alors une dilatation relativement faible de l'élément thermostatique 7 de dosage suffit à provoquer le décollage du clapet tronconique 9 de son siège 14.

Ce dispositif thermostatique à deux régimes de régulation peut être utilisé dans un circuit de refroidissement de moteur thermique, de diverses manières.

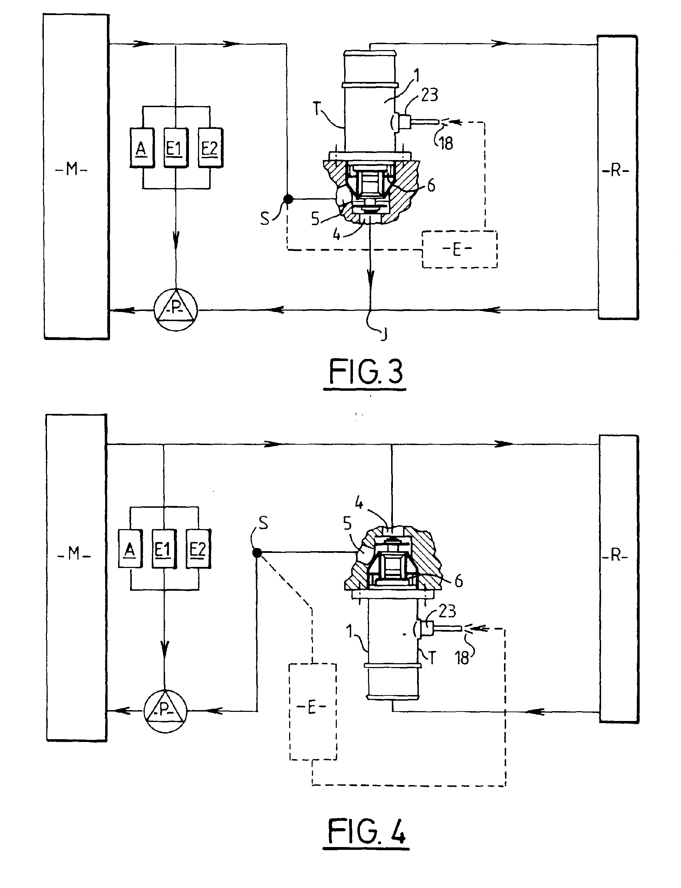

La figure 3 montre un dispositif thermostatique T tel que décrit ci-dessus dans un montage dit « en sortie de moteur ».

Plus précisément, l'accès 5 sans clapet du dispositif thermostatique T est une entrée reliée à la sortie de liquide de refroidissement d'un moteur M et est donc alimenté en liquide chaud ; l'accès 6 à clapet tronconique est une sortie reliée à l'entrée d'un radiateur de refroidissement R auquel elle transmet du liquide chaud, à refroidir ; l'accès 4 à clapet plan est une sortie de liquide chaud reliée à une entrée d'une pompe de circulation P dont la sortie est reliée à l'entrée de liquide de refroidissement du moteur, pour transmettre à cette pompe une partie du liquide chaud provenant de l'accès 5, en fonction de la position de l'élément thermostatique 7 de dosage, additionné à du liquide refroidi provenant du radiateur R, au niveau d'un organe de jonction J relié d'une part au dispositif thermostatique T et d'autre part au radiateur R ; dans une ou plusieurs dérivations branchées d'un côté à la ligne reliant la sortie du moteur et l'accès d'entrée 5 sans clapet, et de l'autre côté à une entrée supplémentaire de la pompe P, sont insérés un aérotherme A et des échangeurs E1, E2 d'huile de boîte de vitesses et d'huile moteur respectivement. Un bloc électronique de commande et d'alimentation E est relié électriquement d'une part à une sonde de température S détectant la température du liquide chaud en provenance du moteur allant au dispositif thermostatique T, et d'autre part au dispositif thermostatique T par l'intermédiaire des conducteurs 18, pour sélectivement fournir ou non à l'élément thermostatique 17 de réglage de seuil son énergie de chauffage, en fonction de la température détectée ; de préférence, le bloc E est également relié à une alarme (non représentée) visible ou/et audible par le conducteur, destinée à être activée par le bloc E lorsque la sonde S détecte une température au moins égale à une température de sécurité prédéterminée.

La figure 4 montre un dispositif thermostatique tel que décrit ci-dessus dans un montage dit « en entrée de moteur » (les mêmes références numériques désignent les mêmes éléments que précédemment).

L'accès 4 à clapet plan est une entrée reliée à la sortie de liquide de refroidissement d'un moteur M à laquelle est également reliée l'entrée d'un radiateur de refroidissement R, pour en recevoir un liquide chaud ; l'accès 6 à clapet tronconique est une entrée reliée à la sortie du radiateur de refroidissement R pour en recevoir du liquide froid ; l'accès 5 sans clapet est une sortie de liquide pouvant être ainsi un mélange de liquide chaud et de liquide froid, ou du liquide chaud, ou du liquide froid, relié à une entrée d'une pompe de circulation P dont la sortie est reliée à l'entrée de liquide de refroidissement du moteur pour lui transmettre du liquide dont la température dépend de la position de l'élément thermostatique 7 de dosage ; dans une ou plusieurs dérivations branchées d'un côté à la ligne reliant la sortie du moteur et l'accès d'entrée 4 à clapet plan et de l'autre à une entrée supplémentaire de la pompe P, sont insérés un aérotherme A et des échangeurs E1, E2 d'huile de boîte de vitesse et d'huile moteur respectivement. Un bloc électronique de commande et d'alimentation E est relié électriquement d'une part à une sonde de température S détectant la température du liquide allant au moteur et provenant du dispositif thermostatique T, et d'autre part au dispositif thermostatique T par l'intermédiaire des conducteurs 18, pour sélectivement fournir ou non à l'élément thermostatique 17 de réglage de seuil son énergie de chauffage, en fonction de la température détectée ; de préférence, le bloc E est également relié à une alarme (non représentée) visible ou/et audible par le conducteur, destinée à être activée par le bloc E lorsque la sonde S détecte une température au moins égale à une température de sécurité prédéterminée.

Dans les deux montages des figures 3 et 4, au lieu de mettre en oeuvre un chauffage électrique pour réguler à basse température (moteur à pleine charge), on met en oeuvre un tel chauffage pour réguler à haute température (moteur environ à demi-charge).

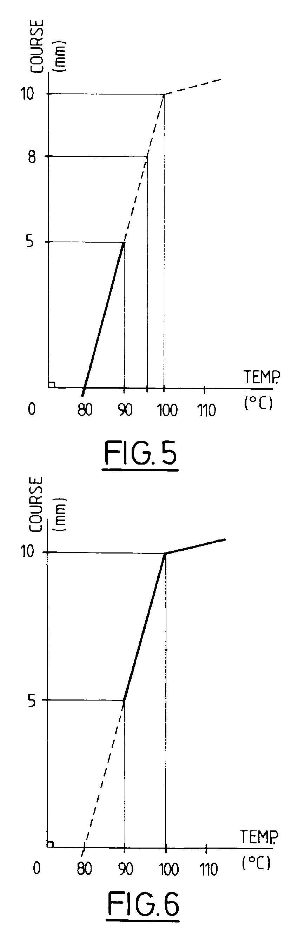

Les figures 5 et 6 illustrent un exemple de mode de fonctionnement du dispositif thermostatique selon l'invention, que ce soit dans le montage de la figure 3 ou dans celui de la figure 4, et montrent alors la courbe « course d'élongation du piston de l'élément principal / température de régulation », d'une part en régulation à basse température (figure 5: moteur à pleine charge, élément de réglage de seuil non chauffé), et d'autre part en régulation à haute température (figure 6: moteur à demi-charge, élément de réglage de seuil chauffé).

Si, le moteur fonctionnant à pleine charge, l'élément 17 de réglage de seuil n'est pas chauffé, la course d'élongation du piston à partir de sa position rétractée est de cinq millimètres, ce qui correspond à une température de régulation T1 telle que repérée par la sonde S de la figure 4, comprise dans la gamme (basse) de 80° C à 90° C. Si, le moteur fonctionnant à demi-charge, l'élément 17 de réglage de seuil est chauffé, la course d'élongation du piston est également de cinq millimètres, mais comptés au-delà des cinq millimètres de la course précédente, ce qui correspond à une température de régulation T2 telle que repérée par la sonde S de la figure 4, comprise dans la gamme (haute) de 90° C à 112° C.

Toujours dans le même exemple, on choisit une température T3 de sécurité supérieure à la gamme haute, par exemple T3 = 113° C, pour laquelle si elle est détectée par la sonde S, on revient automatiquement en régulation à basse température quelles que soient les conditions de charge du moteur, et on déclenche une alarme reliée également au bloc électronique E, visible ou audible par le conducteur du véhicule. Ainsi, si la sonde S détecte une température au moins égale à T3, l'alimentation électrique de l'élément 17 de réglage est désactivée, l'élément de réglage n'est pas chauffé électriquement, et l'alarme est activée.

Ici, dans la plupart des cas de défaillance du dispositif thermostatique T ou du bloc électronique E, on introduit donc dans le moteur un liquide de refroidissement à la température appropriée à un fonctionnement à pleine charge du moteur, et on limite notablement les risques de détérioration de celui-ci, contrairement aux dispositifs connus à ce jour.

## Revendications

1. Dispositif thermostatique à deux régimes de régulation, comportant un équipage mobile de dosage de fluide comprenant deux clapets (9, 10) et adapté pour se mouvoir dans une chambre (3) présentant un premier accès, d'entrée de fluide, un deuxième accès, de sortie de fluide, et au moins un troisième accès, au moins deux de ces trois accès étant entourés de sièges respectifs (14, 15) pour les deux clapets de sorte que lorsque l'un quelconque des clapets quitte son siège et s'en éloigne, l'autre se rapproche du sien éventuellement jusqu'à obturation, l'équipage mobile de dosage étant porté par une partie d'un élément thermostatique (7) de dosage de fluide qui est mobile par rapport à une autre partie de l'élément thermostatique disposée au moins partiellement hors de la chambre, dispositif caractérisé en ce qu'il comporte une partie de boîtier sous la forme d'une conduite (1) dont une extrémité débouche dans la chambre (3) par un siège (14) de clapet entourant l'un des accès (6) de la chambre, cette conduite contient un élément thermostatique (17) de réglage de seuil comportant une partie mobile portant un équipage mobile de réglage de seuil muni d'une butée mobile (16) pour la partie de l'élément thermostatique (7) de dosage qui est hors de la chambre (3), et l'élément thermostatique (17) de réglage de seuil comporte des moyens de chauffage électrique adaptés pour être reliés électriquement à une source d'alimentation électrique activable et désactivable sélectivement pour que, quand l'élément (17) de réglage n'est pas chauffé, la distance entre la butée mobile (16) et le siège (14) d'accès côté conduite (1), et ainsi la température pour laquelle ce siège est libéré par son clapet (9), soient plus faibles que quand il est chauffé.

2. Dispositif selon la revendication 1, caractérisé en ce que la conduite (1) est centrée sur un axe longitudinal sur lequel sont également centrés les deux sièges (14, 15) de clapets, et la partie mobile de l'élément thermostatique (7) qui porte l'équipage mobile comprenant les deux clapets (9, 10) est mobile en translation longitudinale le long de cet axe.

3. Dispositif selon la revendication 1, caractérisé en ce que l'équipage mobile de l'élément thermostatique (17) de réglage de seuil comporte une partie fixe logée dans une cuvette (19) intérieure à la conduite (1 ) et reliée à la paroi de celle-ci, et une partie mobile comportant une extrémité libre tournée vers une extrémité de la conduite qui est à l'opposé du siège (14) de celle-ci.

4. Dispositif selon la revendication 3, caractérisé en ce que l'équipage mobile de l'élément thermostatique (17) de réglage de seuil comporte un palonnier (21) en forme d'étrier s'étendant en direction du siège (14) de la conduite, et la butée mobile (16) est portée par cet équipage mobile au niveau des extrémités de branches de l'étrier situées du côté du siège tronconique.

5. Dispositif selon la revendication 1, caractérisé en ce que les moyens de chauffage électrique comprennent une résistance électrique logée dans,une partie fixe de l'élément thermostatique (17) de réglage de seuil portée par une cuvette intérieure (19) de la conduite (1).

6. Dispositif selon la revendication 1, caractérisé en ce que les moyens de chauffage électrique sont reliés par des conducteurs électriques (18) à une source d'alimentation électrique reliée par ailleurs à une sonde (S) de détection de température adaptée pour détecter la température d'un liquide.

7. Dispositif selon la revendication 1, caractérisé en ce que les moyens de chauffage électrique sont reliés par des conducteurs électriques (18) à une source d'alimentation électrique reliée par ailleurs à une sonde (S) de détection de température adaptée pour détecter la température d'un liquide et à une alarme, pour que, lorsque la sonde détecte une température au moins égale à une température de sécurité (T3) prédéterminée, la source d'alimentation électrique soit désactivée et ainsi d'une part l'élément (17) de réglage ne soit pas chauffé électriquement et le dispositif régule dans une gamme basse de températures, et d'autre part l'alarme soit activée.

8. Dispositif selon la revendication 1, caractérisé en ce que la chambre (3) comporte un accès (6) de sortie entouré d'un siège (14) réalisé dans la conduite (1) pour un clapet (9), un accès (4) de sortie entouré d'un siège (15) pour un clapet (10), et un accès (5) d'entrée.

9. Dispositif selon la revendication 8. caractérisé en ce que l'accès (5) d'entrée est un accès d'entrée de liquide chaud provenant d'un moteur (M) par exemple de véhicule, et les accès de sortie (6, 4) sont des accès de sortie de liquide chaud adaptés pour être reliés respectivement à une entrée d'un radiateur de refroidissement (R) et à une entrée du moteur (M) éventuellement par l'intermédiaire d'une pompe de circulation (P).

10. Dispositif selon la revendication 1, caractérisé en ce que la chambre (3) comporte un accès (6) d'entrée entouré d'un siège (14) réalisé dans la conduite (1) pour un clapet (9), un accès (4) d'entrée entouré d'un siège (15) pour un clapet (10), et un accès (5) de sortie.

11. Dispositif selon la revendication 10, caractérisé en ce que l'accès (6) d'entrée entouré d'un siège réalisé dans la conduite est un accès d'entrée de liquide froid adapté pour être relié à un radiateur (R) de refroidissement par exemple de véhicule, l'autre accès (4) d'entrée est un accès d'entrée de liquide chaud provenant d'un moteur (M) du véhicule, et l'accès (5) de sortie est un accès de sortie de liquide chaud ou de liquide froid ou d'un mélange de liquide chaud et de liquide froid en fonction de la position de l'élément thermostatique (7) de dosage.
